# EUROPEAN PATENT APPLICATION

(11) **EP 4 092 499 A1**
(43) Date of publication of application: **23.11.2022**
(21) Application number: 20920277.9
(22) Date of filing: 19.02.2020
(51) Int. Cl.: G05B 19/418

(54) **KNOWLEDGE BASE BUILDING METHOD AND APPARATUS, FACTORY SYSTEM, AND COMPUTING DEVICE**

(71) Applicant: Siemens Aktiengesellschaft, 80333 München (DE)
(72) Inventor: YUAN, Zhou, Wuhan, Hubei 433209 (CN); WANG, Qi, Wuhan, Hubei 430075 (CN); LIU, Yi, Wuhan, Hubei 430024 (CN)
(74) Representative: Isarpatent
(86) International application number: PCT/CN2020/075902
(87) International publication number: WO 2021/163935

(57) **Abstract**

The present disclosure relates to a knowledge base building method and apparatus, a factory system, and a computing device. The knowledge base building method comprises: building a first model on the basis of a connection relationship between a controller and a device; building a second model on the basis of a correspondence between an input/output port of the controller and memory of the controller; and building a knowledge base on the basis of the first model and the second model, the knowledge base comprising configuration information related to the device.

## Description

### TECHNICAL FIELD

The present disclosure relates to the technical field of digital factories, and in particular to a knowledge base building method and apparatus, a factory system and a computing device.

### BACKGROUND TECHNOLOGY

In existing digital factory solutions, IT systems and automation systems are separated from each other. Generally, automation systems involve devices or sensors, while IT systems more involve upper-level users. A controller is connected to devices or sensors, while the automation system runs on the controller. To collect data from the sensors, a large amount of configuration work is needed in the automation system.

For example, when a sensor is connected to a programmable logic controller (PLC), if the S7 communication protocol is used between the sensor and the PLC, it is necessary to configure parameters such as the IP address, rack, slot, area type, index, data type, offset, bit offset, length, etc. S7 is only one example of a communication protocol, and there may be many other types of protocols. It is conceivable that, to deploy an IT system in a factory, it is necessary to integrate, calculate, analyze and visualize all the data involved in production, while in the IT system, a large amount of configuration work, which is a repeat of the configuration work in the automation system, needs to be done.

Although some user-friendly interfaces can be used to reduce the workload in existing IT systems, this is still time consuming and tedious.

### SUMMARY OF THE INVENTION

A brief summary of the present invention is given below in order to provide a basic understanding of certain aspects of the present invention. It should be understood that this is not an exhaustive summary of the present invention. It is not intended to define the key or important parts of the present invention, nor is it intended to limit the scope of the present invention. Its purpose is only to give some concepts in a simplified form as a prelude to the more detailed description that follows.

In view of the above, the present disclosure provides a digital factory system. In the digital factory system, linked devices can be automatically configured in the IT system without repeating the configuration in the automation system, which greatly simplifies the device configuration process in the IT system, thereby providing engineers with great convenience and improving their work efficiency.

According to one aspect of the present disclosure, a knowledge base building method is provided, comprising: building a first model based on a connection relationship between a controller and a device; building a second model based on a correspondence between an I/O port of the controller and memory of the controller; and building a knowledge base based on the first model and the second model, wherein the knowledge base comprises configuration information related to the device.

Optionally, in one example of said aspect, building a first model based on a connection relationship between a controller and a device comprises: extracting the connection relationship between the controller and the device based on at least one of the following: an image showing the connection relationship between an I/O port of the controller and the device, a document defining the connection relationship between an I/O port of the controller and the device, and a schematic diagram illustrating the connection relationship between the I/O port of the controller and the device.

Optionally, in one example of said aspect, building a second model based on a correspondence between an I/O port of the controller and memory of the controller comprises: determining the correspondence between the I/O port of the controller and memory of the controller based on a parameter description and a logic control program of a function block of the controller. According to another aspect of the present disclosure, a knowledge base building apparatus is provided, comprising: a first model building unit, configured to build a first model based on a connection relationship between a controller and a device; a second model building unit, configured to build a second model based on a correspondence between an I/O port of the controller and memory of the controller; a knowledge base building unit, configured to build a knowledge base based on the first model and the second model, wherein the knowledge base comprises configuration information related to the device.

Optionally, in one example of said aspect, the first model building unit is further configured to: extract the connection relationship between the controller and the device based on at least one of the following: an image showing the connection relationship between an I/O port of the controller and the device, a document defining the connection relationship between an I/O port of the controller and the device, and a schematic diagram of the connection between an I/O port of the controller and the device.

Optionally, in one example of said aspect, the second model building unit is further configured to: determine the correspondence between an I/O port of the controller and memory of the controller based on a parameter description and a logic control program of a function block of the controller. According to another aspect of the present disclosure, a digital factory system is provided, comprising an information system, an automation system and an auxiliary system, wherein the automation system runs on a controller, the controller is connected to a device, the automation system conducts configuration management of the device; and the information system determines configuration information for the device based on a knowledge base in the auxiliary system, wherein the knowledge base is built by the method described in the aspect above.

According to another aspect of the present disclosure, a computing device is provided, comprising: at least one processor; and a memory coupled to the at least one processor, wherein the memory is used to store an instruction, which, when executed by the at least one processor, causes the processor to implement the method described above.

According to another aspect of the present disclosure, a non-transitory machine readable medium is provided, which stores an executable instruction, which, when executed, causes the machine to implement the method described above.

According to another aspect of the present disclosure, a computer program product is provided, comprising a computer executable instruction, which, when executed, causes at least one processor to implement the method described above. According to another aspect of the present disclosure, a computer program product is provided, which is tangibly stored in a computer readable medium and comprises a computer executable instruction, which, when executed, causes at least one processor to implement the method described above.

In the digital factory system according to the present disclosure, linked devices can be automatically configured in the IT system without repeating the configuration in the automation system, which greatly simplifies the device configuration process in the IT system, thereby providing engineers with great convenience and improving their work efficiency.

In the knowledge base building method according to the present disclosure, artificial intelligence technology may be used to read images, and parse schematic diagrams of circuits or extract documents, so as to use the extracted information to build a knowledge base.

An auxiliary system is provided in the digital factory system according to the present disclosure, the auxiliary system comprises a knowledge base built by use of the method according to the present disclosure, and an interface is provided for the IT system, through which the IT system can perform inquiries in the knowledge base to automatically determine the configuration parameters of the device.

### BRIEF DESCRIPTION OF THE DRAWINGS

By referring to the following description of the embodiments of the present invention in conjunction with the accompanying drawings, it will be easier to understand the above and other objectives, features and advantages of the present invention. The components in the drawings are intended only to illustrate the principle of the present invention. In the drawings, the same or similar technical features or components will be represented by the same or similar reference numerals.
Figure 1 is a schematic system architecture diagram of a digital factory system;
Figure 2 is a flowchart of an exemplary process of the knowledge based building method according to one embodiment of the present invention;
Figure 3 is a schematic circuit diagram of a programmable logic controller;
Figure 4 is a ladder diagram of the function block FC105;
Figure 5 is a block diagram of an exemplary configuration of the knowledge base building apparatus according to one embodiment of the present disclosure; and
Figure 6 is a block diagram of the computing device for knowledge base building according to one embodiment of the present disclosure.

### Reference numerals in the drawings

| | | | |
|---|---|---|---|
| 100: | digital factory system | 101: | IT system |
| | | | |
| 103: | automation system | 106: | auxiliary system |
| 102: | controller | 104: | I/O port |
| 105: | device | 107: | knowledge base |
| 1011: | IP address | 1012: | rack number |
| 1013: | index | 1014: | offset |
| 1081: | document | 1082: | image |
| 1083: | schematic circuit diagram | 200: | knowledge base building method |
| | | | |
| S202, S204, and S206: | steps | 500: | knowledge base building apparatus |
| | | | |
| 502: | first model building unit | 504: | second model building unit |
| | | | |
| 506: | knowledge base building unit | 600: | computing device |
| 602: | processor | 604: | memory |

### SPECIFIC EMBODIMENTS

The subject described herein will now be discussed by referring to some exemplary implementations. It should be understood that the discussion of these implementations is only intended to enable those skilled in the art to better understand and realize the subject described herein, and is not intended to limit the scope, applicability, or examples set forth in the claims. The functions and arrangement of the discussed elements may be changed without departing from the scope of the present disclosure. Various processes or components in each example may be deleted, replaced or added as needed. For example, the method described herein may be executed in a sequence different from the described sequence, and various steps may be added, omitted, or combined. In addition, the features described in relation to some examples may also be combined in other examples.

As used herein, the term "comprising" and its variations is an open term that means "including but not limited to". The term "based on" means "at least partially based on". The term "one embodiment" or "an embodiment" means "at least one embodiment". The term "another embodiment" means "at least one other embodiment". The term "first", "second", etc. may refer to different or the same objects. Other definitions, either explicit or implicit, may be included below. Unless clearly indicated in the context, the definition of a term is consistent throughout the description.

A digital factory system that can automatically configure configuration parameters of devices in an IT system is proposed in the present disclosure.

The system and method according to the embodiments of the present disclosure will be described below with reference to the accompanying drawings.

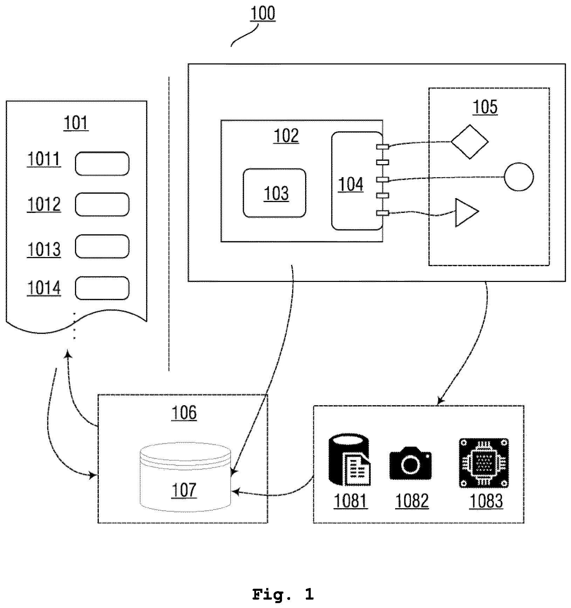

Figure 1 is a schematic system architecture diagram of a digital factory system 100. The digital factory system 100 comprises an IT (information) system 101, an automation system 103 and an auxiliary system 106. In the system, the automation system 103 runs on a controller 102, and the controller 102 has a plurality of I/O ports 104. The controller 102 is connected to various devices 105 respectively via the plurality of I/O ports 104. The automation system 103 needs to configure various parameters for each device 105 connected to the controller 102, for communication between the automation system 103 and the devices 105. The devices 105 may be, for example, sensors, etc.

In the digital factory system according to the present disclosure, the IT system 101 can automatically determine the configuration information for the devices 105 based on a knowledge base 107 in the auxiliary system 106. Examples may include, but are not limited to, IP address 1011, rack number 1012, index 1013, offset 1014, etc.

The knowledge base 107 in the auxiliary system 106 is built in advance based on the connection relationships between the controller 102 and the devices 105 and the correspondence between the I/O ports and the memory in the controller 102. The connection relationship between the controller 102 and a device 105 may be obtained, for example, through a document 1081, an image 1082, a schematic circuit diagram 1083, etc., which will be described in detail below.

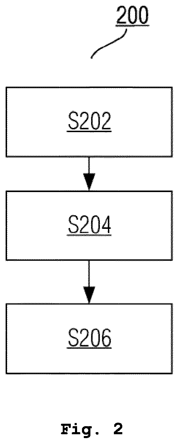

The knowledge based building method according to one embodiment of the present invention will be described below with reference to Figure 2.

Figure 2 is a flowchart of an exemplary process of the knowledge based building method 200 according to one embodiment of the present invention.

Firstly, in block S202, a first model is built based on the connection relationship between the controller and a device. The first model here defines the connection between the controller and a device.

As mentioned previously, in a digital factory, the automation system runs on a controller. The controller here may be, for example, a programmable logic controller. The controller has a plurality of I/O ports, and the controller is connected to different devices through different I/O ports. In the present disclosure, several methods are proposed as follows to determine the connection relationship between the controller and a device, and thus to build the first model.

For example, the connection relationship between the controller and a device may be determined based on one or more from an image showing the connection relationship between an I/O port of the controller and the device, a document defining the connection relationship between an I/O port of the controller and the device, and a schematic diagram illustrating the connection relationship between an I/O port of the controller and the device.

Among them, determining the connection relationship between the controller and a device based on an image showing the connection relationship between an I/O port of the controller and the device may specifically comprise the following operations. Firstly, a label is attached to each end of each wire for marking before wiring the device to an I/O port of the controller. Then a photograph of the controller and the device connected by the wire is taken. In this way, all the wires in this photograph are marked on both ends, and the marking can be used to identify the connection between the I/O ports of the controller and a device. The connections between the I/O ports and the devices can be extracted from the photograph by use of an image recognition technique. For example, if it is determined from the photograph that PIW320 is connected to wire 001 and the other end of wire 001 is connected to the pin of a temperature sensor, it can be known that the temperature sensor is connected to PIW320 of the controller.

In one example, a document may be established that comprise the relationships among the numbering of the I/O ports of the controller, the identification numbers of the devices, and the labels of the wires connecting them. The connection relationship between an I/O port of the controller and a device can also be determined by means of this document.

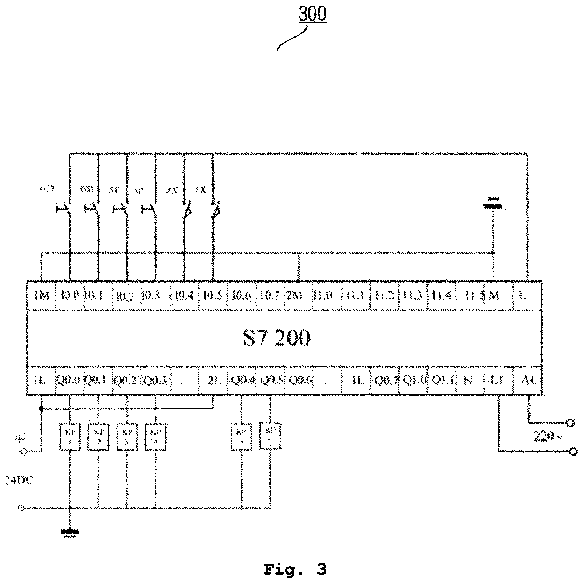

In another example, the schematic circuit diagram of the controller may also be used to obtain the connection relationship between the controller and a device for building the first model. For example, Figure 3 is a schematic circuit diagram of a programmable logic controller S7 200. Through this schematic circuit diagram, for example, the following connection relationships can be determined: GT1 is connected to I0.0, and GS1 is connected to I0.1, wherein GT1 and GS1 represent normally open contact switches, and I0.0 and I0.1 represent the two contacts 0 and 1 of the input module numbered 0.

Here, the connection relationship between an input module of the controller and a device determined by use of a schematic circuit diagram is illustrated. Those skilled in the art can understand that the circuit schematic diagram of the controller can be used to determine the connection relationship between various ports of the controller and different devices, which will not be detailed here.

For the image, document and circuit diagram described above, artificial intelligence technology may be used to extract the information therein to determine the connection relationship between the controller and a device, so as to build the first model representing the connection relationship between the controller and devices.

The built first model may have a data structure, for example, as follows:

```
 {
     devices:[
         {
         device_id:device1,
         links:[
               {
                      pin:1001
                      io_port:io1.1
               },
              {
                     pin: 1002
                     io_port:io1.2
             }
       ]
 },
         {
         device_id:device2,
         links:[
            {
                    pin: 1003
                    io_port:io1.3
            },
            {
                   pin:1004
                   io_port:io1.4
            }
        ]
     }
   ]
 }
```

Those skilled in the art can understand that the first model may also use other forms to represent the connection relationship between the controller and devices, and it is not limited to the data structure described above.

Next, in block S204, a second model is built based on the correspondence between the I/O ports of the controller and the memory of the controller.

Specifically, the correspondence between an I/O port of the controller and the memory of the controller may be determined based on a parameter description and the logic control program of a function block of the controller.

In a specific example, to collect data from a temperature sensor, reference may be firstly taken from the parameters in the function block template of the programming software of the programmable logic controller (PLC), for example, the function block FC105 in STEP7. Table 1 below shows a specific example of a parameter description of the function block FC105.

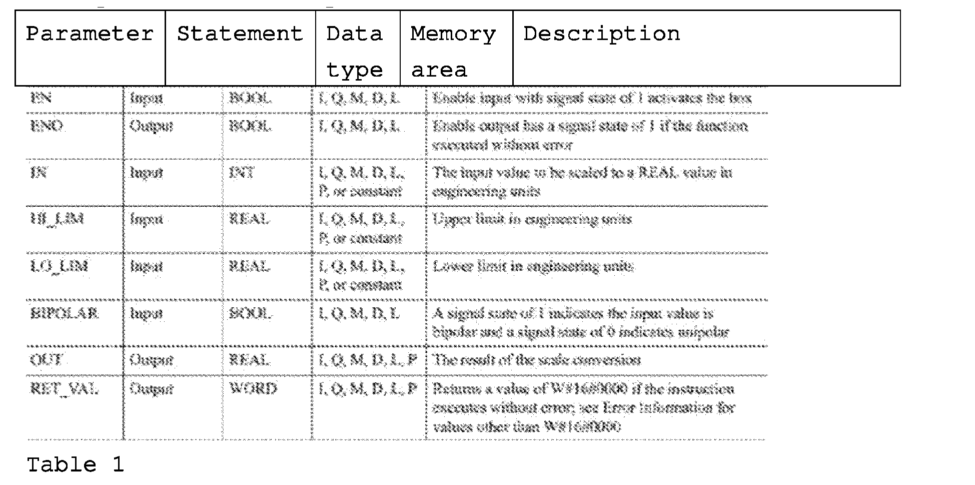

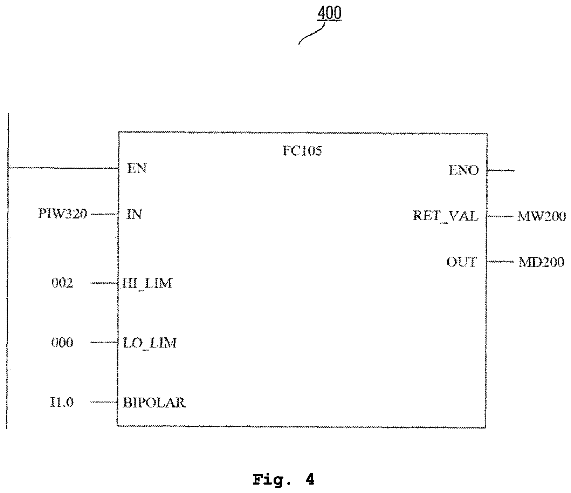

From the description in Table 1, information can be extracted, for example, IN is the input value, HI_LIM is the upper limit, LO_LIM is the lower limit, OUT is the conversion result, etc. By referring to the logic control program of a function block, it can be known how to use the function block to acquire analog inputs. In the above specific example, the data of the temperature sensor may be read through programming in the controller by use of a ladder diagram. Figure 4 is a schematic ladder diagram of the function block FC105. The specific process of collecting an analog input will be described in detail below, taking the function block FC105 as an example.
1. FC105 reads the integer value of an analog input stored in PIW320 (parameter IN). For this example, the status of I1.0 (parameter BIPOLAR) determines whether the analog input is bipolar or unipolar. When I1.0=1, the corresponding analog input is bipolar, for example, from -10V to +10V; when I1.0=0, the corresponding analog input is unipolar, for example, 0V-10V, or 4mA-20mA. Because the value of I1.0 is 0, FC105 will take the analog input as unipolar (0 to 27648).
2. FC105 converts the integer to a real number.
3. FC105 adjusts this real number to a value between 0.00 (parameter LO_LIM) and 400.00 (parameter HI_LIM):
   - If the function is executed without errors, FC105 sets ENO and Q1.1 to 1 (ON) and RET_VAL (MW200) to W#16#0000 (hex);
   - If the input integer value is greater than 27648 or less than 0, FC105 sets the output (OUT) to 400.00 (HI_LIM) or 0.00 (LO_LIM), respectively, and FC105 also sets ENO and Q1.1 to 0 (OFF) and returns an error when RET_VAL is set as W#16#0008 (hex) .
4. FC105 stores the adjusted value in MD220 (parameter OUT). To build the second model, this configuration process may be recorded, the context information from the program may be analyzed, and then the correspondence between the I/O ports of the controller and the memory may be extracted, for example, PIW is connected to parameter IN, 000 to parameter LO_LIM, 002 to parameter HI_LIM, and MD200 to parameter OUT.

A specific example of extracting the correspondence between the I/O ports of the controller and the memory is described above taking the function block FC105 of the programmable logic controller as an example.

The correspondence between the I/O ports of the controller and the memory of the controller may be determined based on the parameter description and the logic control program of different function blocks to build the second model.

The built second model may have a data structure, for example, as follows:

```
   {
       procedure_name: temperature_collection,
       modules:[
         {
               name:FC105,
               inputs: [
                    {
                         name:EN,
                          data_type:BOOLEAN,
                          description:"Enable input with signal state"
                  },
                  {
                        name:IN,
                        data_type:INT,
                         description:"The input value to be scaled"
                 }
         ],
         outputs: [
            {
                 name:OUTPUT,
                 data_type:REAL.
                 description:"The result of the scale conversion"
            }
        ],
           params:[
              {
                  name:HI_LlM,
                 data_type:REAL,
                 description:"Upper limit"
              },
              {
                 name:LO_LlM,
                 data_type:REAL,
                 description:" Lower limit"
             }
        ]
    },
           {
                name:module2,
           inputs:[
            {
                name:i1,
                 data_type:INT,
                 description:"input"
           }
           ],
           outputs:[
           {
                 name:o1,
                 data_type:INT,
                 description:"output"
          }
     ],
           params:[
           {
                 name:p1,
                 data_type:INT,
                 description:"param"
           }
     ]
   }
  ]
 }
     {modules: [
           {
               module_name:module1,
               relations:
                    [
             {
                pin:IN,
                tag:PIW320},
             {
                pin:OUT,
                tag:MD200
            }
    ]
   }
  ]
 }
```

Those skilled in the art can understand that the second model may also use other forms to represent the correspondence between the I/O ports and the memory of controller, and it is not limited to the data structure described above.

Finally, in block S206, a knowledge base is built based on the first model and the second model, wherein the knowledge base comprises the configuration information related to the devices connected to the controller.

Through the above process, a knowledge base can be built, which comprises the connection relationship between the controller and devices and the correspondence between the I/O ports and the memory of the controller. This knowledge base is provided in the auxiliary system. When a device connected to the controller needs to be configured in the IT system, the knowledge base can be queried through the structure provided by the auxiliary system according to, for example, the identifier of the device, to determine the relevant parameters for configuring the device. For example, according to the identifier of a device, the I/O port of the controller to which the device is connected can be determined, then the memory address corresponding to the I/O port can be determined, and then a plurality of parameters such as the IP address, rack, slot, area type, index, data type, offset, bit offset, length, etc., of the device can be determined.

In the digital factory system according to the present disclosure, linked devices can be automatically configured in the IT system without repeating the configuration in the automation system, which greatly simplifies the device configuration process in the IT system, thereby providing engineers with great convenience and improving their work efficiency.

In the knowledge base building method according to the present disclosure, artificial intelligence technology may be used to read images, and parse schematic diagrams of circuits or extract documents, so as to use the extracted information to build a knowledge base.

An auxiliary system is provided in the digital factory system according to the present disclosure, the auxiliary system comprises a knowledge base built by use of the method according to the present disclosure, and an interface is provided for the IT system, through which the IT system can perform inquiries in the knowledge base to automatically determine the configuration parameters of the device.

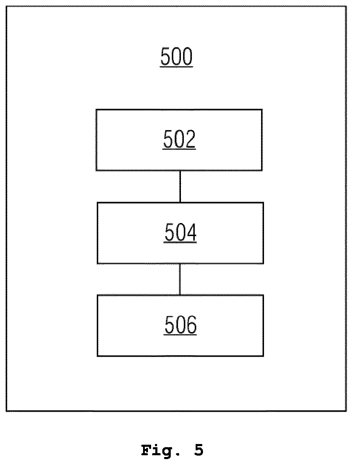

Figure 5 is a block diagram of an exemplary configuration of the knowledge base building apparatus 500 according to one embodiment of the present disclosure.

The knowledge base building apparatus 500 comprises: a first model building unit 502, a second model building unit 504 and a knowledge base building unit 506.

The first model building unit 502 is configured to build a first model based on the connection relationship between the controller and a device.

The second model building unit 504 is configured to build a second model based on the correspondence between the I/O ports of the controller and the memory of the controller.

The knowledge base building unit 506 is configured to build a knowledge base based on the first model and the second model, wherein the knowledge base comprises the configuration information related to the devices connected to the controller.

Among them, the first model building unit 502 is further configured to: extract the connection relationship between the controller and the device based on at least one of the following: an image showing the connection relationship between an I/O port of the controller and the device, a document defining the connection relationship between an I/O port of the controller and the device, and a schematic diagram of the connection between an I/O port of the controller and the device.

The second model building unit 504 is further configured to: determine the correspondence between an I/O port of the controller and memory of the controller based on a parameter description and a logic control program of a function block of the controller.

It should be noted that the knowledge base building apparatus 500 shown in Figure 5 and the structure of the units thereof are only exemplary, and those skilled in the art can modify the structural black diagram shown in Figure 5 as needed.

The details of the operation and function of each part of the knowledge base building apparatus 500, for example, may be the same as or similar to those of relevant parts of the knowledge base building method 200 in the embodiments of the present disclosure described by referring to Figures 1 to 4, and will not be detailed here.

The knowledge base building method and apparatus according to the embodiments of the present disclosure are described above with reference to Figures 1 to 5. The knowledge base building apparatus above may be implemented as hardware or software or a combination thereof.

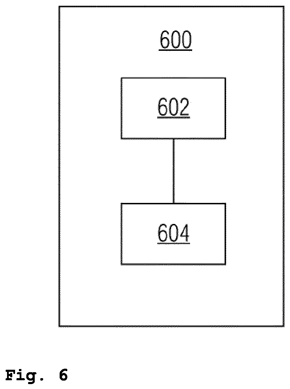

Figure 6 is a block diagram of the computing device 600 for knowledge base building according to one embodiment of the present disclosure. According to one embodiment, the computing device 600 may comprise at least one processor 602, and the processor 602 executes at least one computer-readable instruction (i.e., an element implemented in the form of software as described above) stored or encoded in a computer-readable storage medium (i.e., the memory 604).

In one embodiment, a computer executable instruction is stored in the memory 604, which, when executed, causes the at least one processor 602 to complete the following actions: a knowledge base building method is provided, comprising: building a first model based on a connection relationship between a controller and a device; building a second model based on a correspondence between an I/O port of the controller and memory of the controller; and building a knowledge base based on the first model and the second model, wherein the knowledge base comprises configuration information related to the device.

It should be understood that the computer-executable instruction stored in the memory 604, when executed, causes the at least one processor 602 to perform the various operations and functions in each embodiment of the present disclosure described above with reference to Figures 1 to 5. According to one embodiment, a non-transitory machine-readable medium is provided. The non-transitory machine-readable medium may have a machine-executable instruction (i.e., element implemented in the form of software as described above) that, when executed by a machine, causes the machine to perform the various operations and functions in each of the embodiments of the present disclosure described above with reference to Figures 1 to 5.

According to one embodiment, a computer program is provided, comprising a computer-executable instruction, which, when executed, causes at least one processor to perform the various operations and functions described above in each of the embodiments of the present disclosure with reference to Figures 1 to 5.

According to one embodiment, a computer program product is provided, comprising a computer-executable instruction, which, when executed, causes at least one processor to perform the various operations and functions described above in each of the embodiments of the present disclosure with reference to Figures 1 to 5.

The exemplary embodiments described above for specific implementations with reference to the drawings are not all the embodiments that can be implemented or fall within the scope of the claims. The term "exemplary" used throughout this description means "serving as an example, instance, or illustration", and does not mean "preferred to" or "advantageous over" other embodiments. For the purpose of providing an understanding of the described techniques, the specific implementations comprise specific details. However, these techniques can be implemented without these specific details. In some examples, in order to avoid incomprehensibility of the concepts of the described embodiments, structures and devices in the general common knowledge are shown in the form of block diagrams.

The foregoing description of the present disclosure is provided to enable anyone ordinarily skilled in the art to implement or use the present disclosure. For those ordinarily skilled in the art, various modifications to the present disclosure are obvious, and the general principles defined herein can also be applied to other modifications without departing from the scope of the present disclosure. Therefore, the present disclosure is not limited to the examples and designs described herein, but is consistent with the widest scope that conforms to the principles and novel features disclosed herein.

## Claims

1. A knowledge base building method, comprising:
building a first model based on a connection relationship between a controller and a device;
building a second model based on a correspondence between an I/O port of the controller and memory of the controller; and building a knowledge base based on the first model and the second model, wherein the knowledge base comprises configuration information related to the device.

2. The method as claimed in claim 1, wherein building a first model based on a connection relationship between a controller and a device comprises:
extracting the connection relationship between the controller and the device based on at least one of the following: an image showing the connection relationship between an I/O port of the controller and the device, a document defining the connection relationship between an I/O port of the controller and the device, and a schematic diagram illustrating the connection relationship between an I/O port of the controller and the device.

3. The method as claimed in claim 1 or 2, wherein building a second model based on a correspondence between an I/O port of the controller and memory of the controller comprises:
determining the correspondence between the I/O port of the controller and the memory of the controller based on a parameter description and a logic control program of a function block of the controller.

4. A knowledge base building apparatus, comprising:
a first model building unit, configured to build a first model based on a connection relationship between a controller and a device;
a second model building unit, configured to build a second model based on a correspondence between an I/O port of the controller and memory of the controller; and
a knowledge base building unit, configured to build a knowledge base based on the first model and the second model, wherein the knowledge base comprises configuration information related to the device.

5. The apparatus as claimed in claim 4, wherein the first model building unit is further configured to:
extract the connection relationship between the controller and the device based on at least one of the following: an image showing the connection relationship between an I/O port of the controller and the device, a document defining the connection relationship between an I/O port of the controller and the device, and a schematic diagram of the connection between an I/O port of the controller and the device.

6. The apparatus as claimed in claim 4 or 5, wherein the second model building unit is further configured to:
determine the correspondence between an I/O port of the controller and the memory of the controller based on a parameter description and a logic control program of a function block of the controller.

7. A digital factory system, comprising an information system, an automation system and an auxiliary system, wherein the automation system runs on a controller, the controller is connected to a device, and the automation system conducts configuration management of the device; and
the information system determines configuration information for the device based on a knowledge base in the auxiliary system, wherein the knowledge base is built by the method according to any one of claims 1 to 3.

8. A computing device (600), comprising:
at least one processor (602); and
a memory (604) coupled to the at least one processor (602),
wherein the memory is used to store an instruction, which, when executed by the at least one processor (602), causes the processor (602) to implement the method as claimed in any one of claims 1 to 3.

9. A non-transitory machine readable medium, which stores an executable instruction that, when executed, causes a machine to implement the method as claimed in any one of claims 1 to 3.

10. A computer program, comprising a computer executable instruction, which, when executed, causes at least one processor to implement the method as claimed in any one of claims 1 to 3.

11. A computer program product, which is tangibly stored on a computer readable medium and comprises a computer executable instruction, which, when executed, causes at least one processor to implement the method as claimed in any one of claims 1 to 3.
